# EUROPEAN PATENT APPLICATION

(11) **EP 2 750 027 A2**
(43) Date of publication of application: **02.07.2014**
(21) Application number: 13199317.2
(22) Date of filing: 23.12.2013
(51) Int. Cl.: G06F 3/16

(54) **Display apparatus and controlling method thereof**

(30) Priority: 31.12.2012 KR 20120158296
(71) Applicant: Samsung Electronics Co., Ltd, Gyeonggi-do 443-742 (KR)
(72) Inventor: You, So-yon, Seoul (KR); Park, Eun-hee, Gyeonggi-do (KR); Han, Sang-jin, Gyeonggi-do (KR); Kim, Jae-kwon, Gyeonggi-do (KR)
(74) Representative: Walaski, Jan Filip

(57) **Abstract**

Provided are a display apparatus and controlling method thereof. The display apparatus including a voice receiver which collects a user's utterance, a communicator which transmits the user's utterance to a dialogue type server, and receives response information generated based on the user's utterance, a storage unit which stores control information corresponding to each user's utterance, and a controller which determines whether the control information corresponding to the collected user's utterance is stored in the storage unit and performs operations corresponding to the user's utterance based on a result of the determination.

## Description

The present invention relates to a display apparatus and controlling method thereof, and more particularly, to a display apparatus which performs operations responding to a user's utterance and controlling method thereof.

There are two types of display apparatuses which may recognize voice: an embedded type and a dialogue type display apparatuses. The embedded type display apparatus recognizes a user's utterance with limitations on an utterance command. That is, the embedded type display apparatus may perform a function corresponding to the user's utterance only when the user's utterance corresponding to a predetermined utterance command is collected. That is, when the user's utterance corresponding to the predetermined utterance command is collected, the embedded type display apparatus has an advantage that performs a function corresponding to the corresponding user's utterance more quickly, but it is limited in that it only recognizes the user's utterance corresponding to the utterance command.

The dialogue type display apparatus recognizes various types of user's utterance, understands a user's intention, and performs operations suitable to the user's intention. When the user's utterance is collected, the dialogue type display apparatus receives response information on the user's utterance from a dialogue type server, and performs operations corresponding to the user's utterance based on the received response information. Although the dialogue type display apparatus has an advantage that recognizes various types of user's utterance, and performs operations corresponding to the recognized user's utterance, the dialogue type display apparatus performs functions corresponding to the user's utterance through the aforementioned process. Therefore, in a case of performing simple functional manipulations such as a volume and a channel, etc., the dialogue type display apparatus performs a function corresponding to the user's utterance based on the response information received from the dialogue type server, and a response speed is slower than that of the embedded type display apparatus.

Exemplary embodiments address at least the above problems and/or disadvantages and other disadvantages not described above.

According to an aspect of an exemplary embodiment, there is provided a display apparatus, the display apparatus including a voice receiver which collects a user's utterance, a communicator which transmits the user's utterance to a dialogue type server, and receives response information generated based on the user's utterance, a storage unit which stores control information corresponding to each user's utterance, and a controller which determines whether the control information corresponding to the collected user's utterance is stored in the storage unit and performs operations corresponding to the user's utterance based on a result of the determination.

The controller may perform operations corresponding to the user's utterance based on the stored control information when the control information corresponding to the collected user's utterance is stored in the storage unit, and perform operations corresponding to the user's utterance based on the response information received from the dialogue type server when the control information corresponding to the collected user's utterance is not stored in the storage unit.

The controller may perform operations corresponding to the user's utterance based on the response information received from the dialogue type server when the operations corresponding to the user's utterance are not performed based on the control information stored in the storage unit within a predetermined time.

The display apparatus may further include an outputter which outputs at least one of an image and a voice, wherein the controller may output a confirmation message through the outputter when the confirmation message is matched to the control information corresponding to the collected user's utterance, and control a function of the display apparatus based on the control information when an additional user utterance is collected.

The control information may be information for adjusting the function of the display apparatus to a predetermined target value corresponding to each user's utterance.
The controller may readjust the function of the display apparatus when the additional user utterance is collected after the function of the display apparatus is adjusted to the predetermined target value.

The response information may be one of a response message corresponding to the user's utterance or a control command for controlling the function of the display apparatus.

The dialogue type server may include a first server which converts the collected user's utterance into text information and a second server which generates response information corresponding to the user's utterance converted into the text information, and the controller converts the collected user's utterance into a digital signal and transmits the digital signal to the first server, and when the text information on the user's utterance is received from the first server, transmits the text information to the second server to receive the response information corresponding to the user's utterance

According to an aspect of another exemplary embodiment, there is provided a method of controlling a display apparatus, the method including collecting a user's utterance, transmitting the collected user's utterance to a dialogue type server and receiving response information from the dialogue type server, determining whether control information corresponding to the collected user's utterance is pre-stored in a storage unit, and performing operations corresponding to the user's utterance based on a result of the determination the pre-stored control information, when the control information corresponding to the collected user's utterance is pre-stored, and performing operations corresponding to the user's utterance based on response information received from the dialogue-type server, when the control information corresponding to the collected user's utterance is not pre-stored.

The performing the operations may perform operations corresponding to the user's utterance based on the control information, when the control information corresponding to the collected user's utterance is pre-stored, and perform operations corresponding to the user's utterance based on the response information received from the dialogue-type server, when the control information corresponding to the collected user's utterance is not pre-stored.

The method may further include receiving the response information corresponding to the collected user's utterance from the dialogue-type server after the determining; wherein the performing the operations may include performing operations corresponding to the user's utterance based on the response information when the operations corresponding to the user's utterance are not performed based on the control information pre-stored within a predetermined time.

The performing the operations may output a confirmation message when the confirmation message is matched to the control information corresponding to the collected user's utterance, and control the function of the display apparatus based on the control information.

The control information may be information for adjusting the function of the display apparatus to a predetermined target value corresponding to each user's utterance.

The performing the operations may readjust the function of the display apparatus based on the control information corresponding to a collected additional user's utterance when the additional user utterance is collected after the function of the display apparatus is adjusted to the predetermined target value.

The response information may be one of a response message corresponding to the user's utterance or a control command for controlling the function of the display apparatus.

The dialogue-type server may include a first server which converts the collected user's utterance into text information and a second server which generates response information corresponding to the user's utterance converted into the text information, and the performing the operations may convert the collected user's utterance into a digital signal and transmit the digital signal to the first server, and when text information on the user's utterance is received from the first server, transmit the text information to the second server to receive the response information corresponding to the user's utterance.

According to an aspect of another exemplary embodiment, there is provided a dialogue-type system, the dialogue-type system including: a dialogue-type server which converts user's utterance into text information, and analyzes the converted text information to provide response information corresponding to the user's utterance; and a display apparatus which collects the user's utterance, transmits the collected user utterance to the dialogue-type server, determines whether control information corresponding to the user's utterance is pre-stored , and when the control information is pre-stored, performs the operations corresponding to the user's utterance based on the pre-stored control information, and when the control information is not pre-stored, performs operations corresponding to the user's utterance based on the response information received from the dialogue-type server.

The above and/or other aspects will be more apparent by describing in detail exemplary embodiments thereof with reference to the accompanying drawings, in which:
FIG. 1 is a first exemplary embodiment of a dialogue type system according to an exemplary embodiment;
FIG. 2 is a second exemplary embodiment of a dialogue type system according to another exemplary embodiment;
FIG. 3 is a procedure chart of a method of performing operations corresponding to a user's utterance in a dialogue type system according to an exemplary embodiment;
FIG. 4 is a block diagram of a display apparatus according to an exemplary embodiment;
FIG. 5 is a block diagram of a dialogue type server according to an exemplary embodiment;
FIG. 6 is a flowchart of a method of controlling for performing operations based on a user's utterance in a display apparatus according to an exemplary embodiment; and
FIG. 7 is a flowchart of a method of performing operations corresponding to a user's utterance in a display apparatus according to an exemplary embodiment.

Certain exemplary embodiments are described in higher detail below with reference to the accompanying drawings.

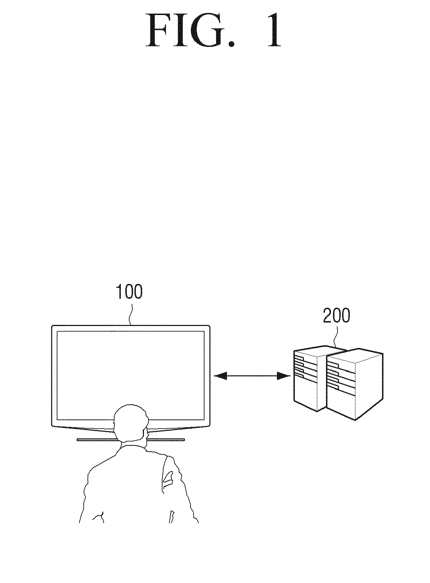

FIG. 1 is a first exemplary embodiment of a dialogue type system of an exemplary embodiment.

As illustrated in FIG. 1, a dialogue type system according to an exemplary embodiment includes a display apparatus 100 and a dialogue type server 200.

While not restricted thereto, the display apparatus 100 according to an exemplary embodiment may be a smart television (TV), a smart phone, a personal computer (PC), a notebook computer, a navigation device, etc. When a user's utterance is collected from the user, the display apparatus 100 transmits the collected user's utterance to the dialogue type server 200, and determines whether control information corresponding to the user's utterance is pre-stored. When the control information corresponding to the user's utterance is pre-stored, the display apparatus 100 performs operations corresponding to the user's utterance based on the pre-stored control information. When the control information corresponding to the user's utterance is not pre-stored, the display apparatus 100 receives response information generated based on the user's utterance from the dialogue type server 200, and performs operations corresponding to the user's utterance based on the received response information.

When the user's utterance is received from the display apparatus 100, the dialogue type server 200 converts the received user's utterance into text information, analyzes the converted text information to generate response information on the user's utterance, and transmits the response information to the display apparatus 100.

For example, when the user's utterance for manipulating a volume is collected, the display apparatus 100 transmits the collected user's utterance to the dialogue type server 200, and determines whether control information corresponding to the collected user's utterance is pre-stored. As a result of the determination, when the controlling information corresponding to the user's utterance is pre-stored, the display apparatus 100 may adjust the volume based on the pre-stored control information. That is, when the control information corresponding to the user's utterance is pre-stored, the display apparatus 100 may adjust the volume based on the pre-stored control information before the response information is received from the dialogue type server 200.

By another example, when the user's utterance for providing contents information is collected, the display apparatus 100 transmits the collected user's utterance to the dialogue type server 200 and determines whether control information corresponding to the collected user's utterance is pre-stored. As a result of the determination, when the control information corresponding to the user's utterance is not pre-stored, the display apparatus 100 may perform functions corresponding to the user's utterance based on the response information received from the dialogue type server 200. That is, the display apparatus may output a response message corresponding to the user's utterance as at least one of an image and a voice based on the response information received from the dialogue type server 200.

By another example, when the user's utterance for controlling an external device 300 is collected, the display apparatus 100 transmits the collected user's utterance to the dialogue type server 200 and determines whether control information corresponding to the collected user's utterance is pre-stored. As a result of the determination, when the control information corresponding to the user's utterance is not pre-stored, the display apparatus 100 may perform a function corresponding to the user's utterance based on the response information received from the dialogue type server 200. That is, the display apparatus 100 may control functions of the external device 300 based on the response information received from the dialogue type server 200. Here, the external device 300 may be an electronic apparatus (e.g., a DVD player, a set top box, a sound device, and a game device, etc.) which is connected to the display apparatus 100.

The display apparatus 100 in a dialogue system according to the exemplary embodiment may perform functions corresponding to the user's intention based on the response information received from the dialogue type server 200, and may perform functions corresponding to the user's intention based on the pre-stored control information corresponding to the user's utterance. Therefore, the display apparatus 100 may not only minimize errors in performing functions corresponding to the user's utterance, but also perform functions corresponding to the user's utterance at a fast processing speed.

The dialogue type server 200 which generates response information based on the received user's utterance analyzes the meaning of the user's utterance received from the display apparatus 100, generates response information for controlling the operations of the display apparatus 100, and transmits the response information to the display apparatus 100. For example, when the user's utterance is received from the display apparatus 100, the dialogue type server 200 may extract an utterance element from the received user's utterance, generate response information related to the user's utterance based on the extracted utterance element, and transmit the generated response information to the display apparatus 100. The utterance element may be a keyword for performing operations requested by the user in the user's utterance. For example, in a case of the user's utterance of "what time does OOO (e.g., a broadcast program title) start this Saturday?", the utterance element may be "this", "Saturday", "OOO (broadcast program title)", "what time", and "starts", etc.

When the utterance element is extracted, the dialogue type server 200 generates response information for performing operations corresponding to the user's utterance based on the extracted utterance element and transmits the response information to the display apparatus 100.

For example, the display apparatus 100 may collect the user's utterance related to an EPG (Electronic Program Guide) of "what time does OOO (broadcast program title) start this Saturday?" When the user's utterance is collected, the display apparatus 100 transmits the collected user's utterance to the dialogue type server 200. , If the user's utterance is an analogue signal, the display apparatus 100 may convert the collected user utterance into a digital signal, and transmit the converted user's utterance to the dialogue type server 200. When the user's utterance converted into the digital signal is received, the dialogue type server 200 generates text information based on the converted user's utterance, analyzes the generated text information, and generates response information corresponding to the user's utterance.

However, it is understood that another exemplary embodiment is not limited thereto. For example, the display apparatus 100 may transmit the collected user's utterance to the dialogue type server 200 without an addition signal processing. In this case, the dialogue type server 200 may convert the user's utterance received from the display apparatus 100 into a digital signal, and generate text information regarding the user's utterance based on the converted digital signal. Converting into text information through the user's utterance is a well-known technology, and thus, detailed explanation thereof is omitted.

As described above, when the text information on the user's utterance "what time does OOO (broadcast program title) start this Saturday?" is generated, the dialogue type server 200 may analyze the user's utterance and extract the utterance element. For example, the extracted utterance element may be "this", "Saturday", "OOO (broadcast program title)", "what time", and "start". When the utterance element is extracted, the dialogue type server 200 generates response information on the broadcast time information when the corresponding broadcast program starts based on the extracted utterance element and transmits the response information to the display apparatus 100. Accordingly, the display apparatus 100 may extract a response message of "OOO (broadcast program title) starts at 7 o'clock" in a voice or a text format image based on the received response information.

By another example, when the display apparatus 100 collects the user's utterance of "reserve OOO (broadcast program title) which starts this Saturday" from the user, the display apparatus 100 transmits the collected user's utterance to the dialogue type server 200. In this case, the dialogue type server 200 generates a control command for performing a reserved recording function of 'OOO" and response information including a response message "recording OOO has been reserved" based on the extracted utterance element, and transmits the control command and the response information to the display apparatus 100. Therefore, the display apparatus 100 may execute a reserved recording function regarding the corresponding broadcast program based on the received response information, and output the response message of "recording OOO has been reserved" in a voice or a text format image.

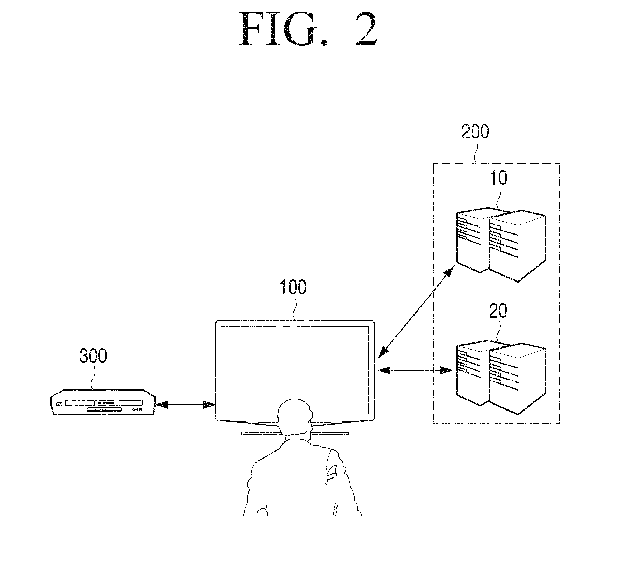

As described above, the dialogue type server 200 may include a first server 10 which converts the user's utterance converted into the digital signal into text information and a second server 20 which generates response information corresponding to the user's utterance. A dialogue type system which provides response information suitable to the user's utterance to the display apparatus 100 through the first server 10 and the second server 20 according to a second exemplary embodiment will now be described with reference to FIG. 2.

Referring to FIG. 2, when the user's utterance is collected from the user, the display apparatus 100 determines whether control information corresponding to the collected user's utterance is pre-stored, converts the collected user's utterance into a digital signal, and transmits the converted user's utterance to the first server 10. When the user's utterance converted into the digital signal is received, the first server 10 generates text information on the user's utterance according to a particular pattern on the pre-stored various user utterances and transmits the text information to the display apparatus 100.

When the text information on the user's utterance is received from the first server 10, the display apparatus 100 transmits the received text information to the second server 20. However, the exemplary embodiments are not limited thereto, and when the text information on the user's utterance is received, the first server 10 may transmit the received text information to the second server 20. When the text information generated from the first server 10 is received through the display apparatus 100 or from the first server 10, the second server 20 analyzes the received text information to extract the utterance element, generates the response information for performing operations corresponding to the user's utterance, and transmits the response information to the display apparatus 100.

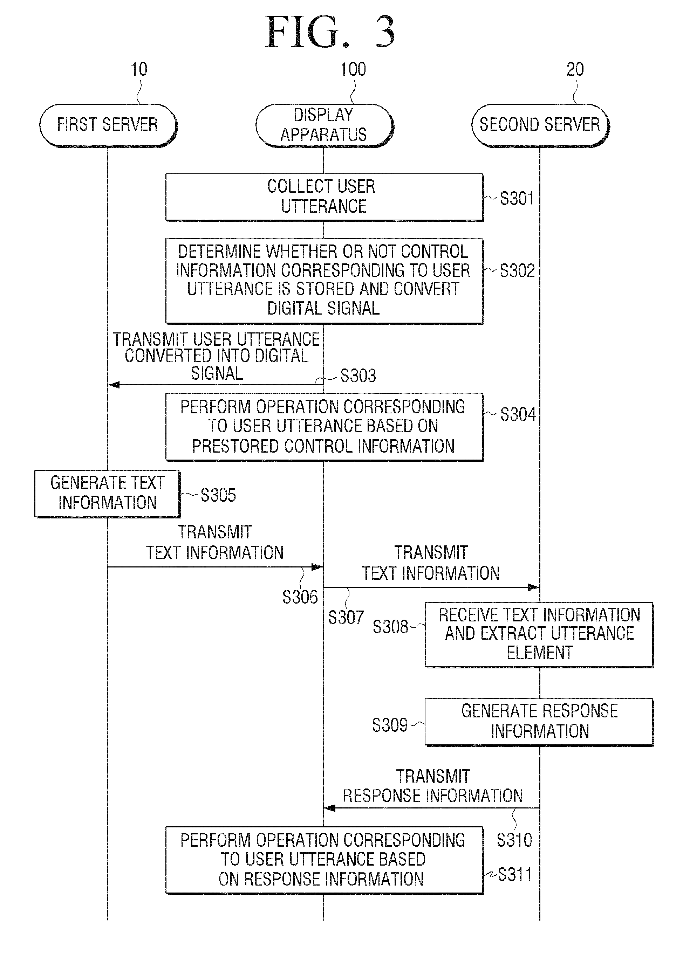

FIG. 3 illustrates a procedure of a method of performing operations corresponding to the user's utterance in a dialogue type system according to an exemplary embodiment.

Referring to FIG. 3, the display apparatus 100 collects the user's utterance from the user (operation S301). When the user's utterance is collected, the display apparatus 100 determines whether control information corresponding to the collected user's utterance is pre-stored (operation S302). The display apparatus 100 converts the received user's utterance into a digital signal and transmits the converted user's utterance to the first server 10 (operation S303). Although the stages for determining whether the control command corresponding to the user's utterance is pre-stored and for transmitting the user's utterance to the first server 10 are divided for convenience of explanation, it is understood that the steps S302 and S303 may be performed at the same time.

When the control information on the collected user's utterance is pre-stored, the display apparatus 100 performs operations corresponding to the user's utterance based on the pre-stored control information without using response information related to the user's utterance received from the first and second servers 10, 20 (operation S304). However, when the control information on the collected user's utterance is not pre-stored, the display apparatus 100 may perform operations corresponding to the user's utterance based on the response information received from the first and second servers 10, 20. As described above, the first server 10 which received the user's utterance converted into the digital signal from the display apparatus 100 generates text information of the converted user's utterance(operation S305), and transmits the generated text information to the display apparatus 100 (operation S306). Next, the display apparatus 100 transmits the text information received from the first server 10 to the second server 20 (operation S307). The second server 20 which receives the user's utterance converted into text information from the display apparatus 100 extracts the utterance element from the received text information (operation S308). Operations of extracting the utterance element from the text information on the user's utterance in the second server 20 have been explained through FIGs. 1 and 2, and thus further explanation is omitted.

When the utterance element is extracted, the second server 20 generates response information for performing functions corresponding to the user's utterance based on the extracted utterance element (operation S309), and transmits the generated response information to the display apparatus 100 (operation S310). Accordingly, the display apparatus 100 performs operations corresponding to the user's utterance based on the response information corresponding to the user's utterance (operation S311).

As described above, when the user's utterance for volume manipulation is collected, i the display apparatus 100 determines whether control information corresponding to the user's utterance is pre-stored, converts the collected user's utterance into the digital signal for receiving the response information corresponding to the user's utterance from the second server 20, and transmits the converted user's utterance to the first server 10. When the control information corresponding to the user's utterance is pre-stored, the display apparatus 100 may adjust the volume based on the pre-stored control information. That is, when the control information corresponding to the user utterance is pre-stored, the display apparatus 100 may adjust the volume based on the pre-stored control information before the response information is received from the second server 20.

However, when the control information corresponding to the user's utterance is not pre-stored, the display apparatus 100 may perform functions corresponding to the user's utterance based on the response information received from the second server 20. For example, the display apparatus 100 may output a response message corresponding to the user's utterance as a voice or an image based on the response information received from the second server 20.

As described above, when the user's utterance is collected, the display apparatus 100 may not only internally determine the user's intentions regarding the collected user's utterance, but may also make determinations through the first and second servers 10, 20. Therefore, the display apparatus 100 may not only perform functions in the response to the user's utterance but also minimize the response error regarding the user's utterance.

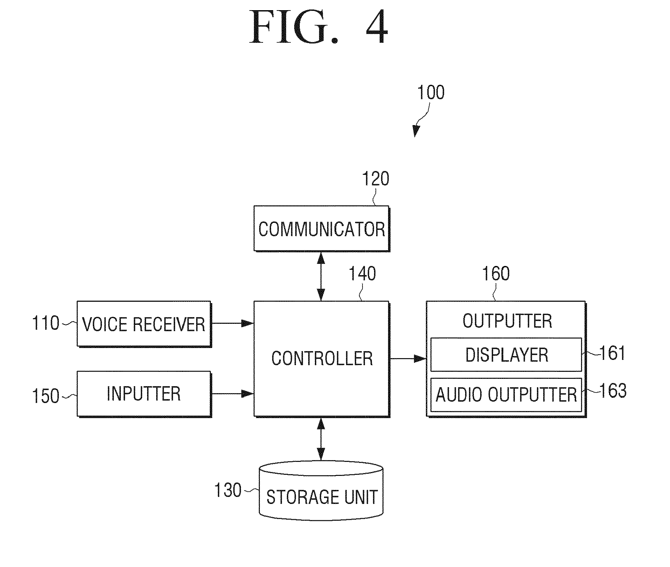

FIG. 4 is a block diagram of a display apparatus according to an exemplary embodiment.

Referring to FIG. 4, the display apparatus 100 includes a voice receiver 110, a communicator 120, a storage unit 130, and a controller 140.

The voice receiver 110 receives a user's utterance from the user. More specifically, when an analogue type user's utterance is collected, the voice receiver 110 samples the collected user utterance and converts the result into a digital signal. In a case where there is noise (for example, an air conditioner sound, a vacuum cleaner sound, and a music sound, etc.), the voice receiver 110 may remove the noise and convert the user's utterance from which the noise has been removed into the digital signal.

When the user's utterance is converted into the digital signal through the voice receiver 110, the communicator 120 transmits the converted digital signal to the dialogue type server 200, and receives the response information corresponding to the transmitted user's utterance. The communicator 120 may include various communication modules such as a short distance wireless communication module (not illustrated), a wireless communication module (not illustrated), etc. The short distance wireless communication module is a communication module for performing a wireless communication with the dialogue type server 200 and the external device 300 located in a short distance, for example, Bluetooth or zigbee, etc. The wireless communication module is a module connected to an external network and communicates according to a wireless communication protocol such as Wifi and Institute of Electrical and Electronics Engineers (IEEE), etc. In addition, the wireless communication module may further include a mobile communication module which accesses the mobile communication network and performs communication according to various mobile communication standards such as 3G (3rd Generation), 3GPP (3rd Generation Partnership Project), LTE (Long Term Evolution), etc.

Although the dialogue type server 200 which provides response information corresponding to the user's utterance may include the first server which converts the user's utterance converted into the digital signal into text information and the second server 20 which analyzes the converted user's utterance and generates response information corresponding to the user's utterance, the exemplary embodiment will be explained based on the response information corresponding to the user's utterance which is generated through the dialogue type server 200.

The storage unit 130 may be embodied into a recording medium such as a HDD (Hard Disk Drive), a memory, etc. in which various programs for operating the display apparatus 100 are stored. For example, the storage unit 30 may have an ROM for storing a program for performing operations of the controller 140, and an RAM for temporarily storing data according to execution of operations. In addition, the storage unit 130 may have an EEROM (Electrically Erasable and Programmable ROM) for storing various reference data. The storage unit 130 stores control information corresponding to each user's utterance. More specifically, the storage unit 130 stores control information corresponding to the user's utterance for adjusting a volume, a channel, and a resolution, etc. The control information is information for adjusting functions of the display apparatus 100 to a predetermined target value, and may be initially determined by a manufacturer.

The inputter 150 is an input means which receives various user's manipulations and transmits the received various user's manipulations to the controller 140. The inputter 150 may be embodied as an input panel. The input panel may be a touch pad, a key pad or a touch screen having various function keys, number keys, special keys, and letter keys, etc. The inputter 150 may be embodied as an RI receiver (not illustrated) for receiving a remote control signal transmitted from a remote control for controlling the display apparatus 100. Through the inputter 150, various user's manipulations for controlling functions of the display apparatus 100 may be input. For example, when the display apparatus 100 is embodied as a smart TV, the inputter 150 may receive user's manipulations for controlling the functions of the smart TV such as a power on/off, a channel change, and a volume change, etc.

The controller 140 transmits the user's utterance collected through the voice receiver 110 to the dialogue type server 200 through the communicator 120, and determines whether control information corresponding to the collected user's utterance is stored in the storage unit 130. As a result of the determination, if the control information corresponding to the user's utterance is stored in the storage unit 130, the controller 140 performs operations corresponding to the user's utterance based on the stored control information, and when response information corresponding to the user's utterance is received from the dialogue type server 200 through the communicator 120, an additional operation is not performed regarding the received response information. However, when it is determined that the control information corresponding to the collected user's utterance is not stored in the storage unit 130, the controller 140 performs operations corresponding to the user's utterance based on the response information received from the dialogue type server 200 through the communicator 120. The response information is one of control commands for controlling functions of the display apparatus 100 or response messages corresponding to the user's utterance. Therefore, when the response information is received from the dialogue type server 200, the controller 140 may output the response message or control the function of the display apparatus through the outputter 160 to be explained based on the received response information.

According to one aspect of the exemplary embodiment, when operations corresponding to the user's utterance are not performed based on the control information stored in the storage unit 130 within a predetermined time, the controller 140 may perform operations corresponding to the user's utterance based on the response information received from the dialogue type server 200.

The display apparatus 100 may include an outputter 160 which outputs an image and a voice. More specifically, the outputter 160 may output the response message related to the user's utterance or a confirmation message in a text type image. The response message may be a message generated based on the response information received from the dialogue type server 200, and the confirmation message may be a message matched to at least one of control information among a plurality of control information stored in the storage unit 130. The outputter 160 which outputs the response message or the confirmation message may include a displayer 161 and audio an audio outputter 163. More specifically, the displayer 161 may be embodied as a Liquid Crystal Display (LCD), an Organic Light Emitting Display (OLED), a Plasma Display Panel (PDP), etc. The displayer 161 may display the response message or the confirmation message related to the user's utterance in a text of image format. The displayer 161 may be embodied as a touch screen format consisting of a mutual layer structure together with a touch pad, and the touch screen may be configured to detect touch input location, size, area, and pressure caused by touch input.

The audio outputter 163 may be embodied as an output port such as a speaker, a jack, etc., to output the response message related to the user's utterance or the confirmation message in an audible sound format.

As described above, the storage unit 130 may match the confirmation message to at least one of control information among the control information on each user's utterance and store the result. Therefore, when the confirmation message is matched to the control information corresponding to the collected user's utterance, the confirmation message matched to the control information corresponding to the user's utterance is output through the outputter 160. When the confirmation message is output through the outputter 160 and the user's utterance is collected through the voice receiver 110, the controller 140 controls functions of the display apparatus 100 based on the control information matched to the confirmation message output through the outputter 160. However, the exemplary embodiment is not limited thereto, and the controller 140 outputs the confirmation message through the outputter 160, and when an additional user's utterance is collected through the voice receiver 110, analyzes the collected additional user's utterance, obtains a new control information corresponding to the additional user's utterance, and controls the functions of the display apparatus 100 based on the new control information.

When the additional user's utterance is collected after the functions of the display apparatus 100 are adjusted based on the control information corresponding to the user's utterance, the controller 140 may readjust the functions of the display apparatus 100 based on the collected additional user's utterance. As described above, the control information is information for adjusting the functions of the display apparatus 100 to the predetermined target value regarding each user's utterance. Therefore, the controller 140 adjusts the functions of the display apparatus 100 to the predetermined target value based on the control information corresponding to the user's utterance, and when the additional user's utterance is collected from the user, determines whether control information corresponding to the collected additional user's utterance is stored in the storage unit 130. When it is determined that the control information corresponding to the additional user's utterance is stored, the controller 140 may readjust the function of the display apparatus 100 to the predetermined target value based on the corresponding control information.
Operations of controlling functions of the display apparatus 100 based on the control information corresponding to the user's utterance in the display apparatus 100 will now be described.

**[Table 1]**

| User utterance | Function adjusting unit |
|---|---|
| Very loud | Current value+10 |
| Very high | Current value +5 |
| Quiet | Current value -5 |
| Very quiet | Current value -10 |
| Moderate | 10 |
| Ssh | Mute |

Table 1 is a table showing function adjusting units corresponding to each user's utterance regarding volume adjustment. The table may be stored in the storage unit 130. When the user's utterance of "turn the volume very loud" is collected, the controller 140 transmits the collected user's utterance to the dialogue type server 200 through the communicator 120, analyzes the user's utterance of "turn the volume very loud" to understand the user's intentions. For example, the controller 140 may understand the user's intentions to adjust the volume to be very loud from the user utterance "turn the volume very loud". Therefore, the controller 140 obtains a target value "current value + 10" from the table related to the volume adjustment based on the user's intentions. Next, the controller 140 may adjust the volume based on the obtained target value. For example, when the current volume value is 5, the controller 140 may adjust the volume value from 5 to 15 based on the obtained target value.

Alternatively, when the user's utterance "turn the volume small" is collected, the controller 140 may analyze the collected user's utterance and understand the user's intentions to adjust the volume to be quiet. Therefore, the controller 140 obtains the target value "current value -5" from the table related to the volume adjustment based on the user's intentions. Next, the controller 140 may adjust the current volume based on the obtained target value. For example, when the current volume value is 10, the controller 140 may adjust the current volume value from 10 to 5 based on the obtained target value.

However, when the user's intentions are not exactly understood from the user's utterance, the controller 140 may output the confirmation message through the outputter 160.

**[Table 2]**

| User utterance | Confirmation message | Function adjusting unit |
|---|---|---|
| Quiet | Turn down the volume? | Current value -5 |
| Too loud | Turn down the volume? | Current value -5 |
| I can't here you | Turn down the volume? | Current value +5 |

Table 2 is a table where a confirmation message is matched to a quantified function adjustment unit regarding the user's utterance, and may be stored in the storage unit 130. When the user's utterance "too loud" is collected from the user, the controller 140 may transmit the collected user's utterance to the dialogue type server 200 through the communicator 120, and may understand the user's intentions to turn down the volume from the user's utterance of "too loud". Therefore, the controller 140 may obtain the target value of "current value -5" from the table related to the volume adjustment based on the user's intentions.

When a confirmation message is matched to the obtained target value, the controller 140 outputs the confirmation message "turn down the volume?" in at least one of a voice and an image through the outputter 160. Next, when an additional user's utterance is collected within a predetermined time, the controller 140 analyzes the collected additional user's utterance and understands the user's intentions.. For example, when the current volume value is 10, the controller 140 may adjust the current volume value from 10 to 5 based on the obtained target value "current value -5".

As described above, the controller 140, which understands the user's intentions from the user's utterance and adjusts the functions of the display apparatus 100 from the target value based on the understood user's intentions, may adjust the functions of the display apparatus 100, and readjust the adjusted function based on the additional user's utterance.

**[Table 3]**

| User utterance | Function adjustment unit |
|---|---|
| Too big / Turned it too high | Current value-3 |
| Too small/ Turned it too low | Current value +5 |

Table 3 is a table quantifying function adjusting units for each user's utterance regarding volume readjustment, which may be stored in the storage unit 130. When the additional user's utterance of "too big" is collected from the user within a predetermined time, the controller 140 which adjusted the volume based on the target value corresponding to the previous user's utterance transmits the collected additional user's utterance to the dialogue type server 200 through the communicator 120, analyzes the additional user's utterance "too big", and understands the user's intentions. That is, the controller 140, when the additional user utterance "too big" is collected within the predetermined time, understands the user's intention to readjust the adjusted volume. Therefore, the controller 140 may obtain the target value "current value -3" based on the table stored in the storage unit 130 regarding the volume readjustment.

For example, when the target value "current value -3" is obtained regarding volume readjustment with the current volume value which is adjusted to 15 based on the previous utterance, the controller 140 may readjust the volume value from 15 to 12 based on the obtained target value.

When a target value corresponding to the user's utterance is not obtained by the at least one of tables 1 to 3, the controller 140 may output a response message or adjust functions of the display apparatus 100 based on the response information received from the dialogue type server 200 through the communicator 120.

For example, when the user's utterance of "reserve OOO (broadcast program title) which is aired today" is input from the user, the controller 140 converts the user's utterance into a digital signal and transmits the digital signal to the dialogue type server 200. Accordingly, the dialogue type server 200 generates text information on the user's utterance of "reserve OOO (broadcast program title) which is aired today", extracts the utterance element "today", "OOO(broadcast program title)", "record" from the text information determines the EPG related function based on the extracted utterance element, and transmits the control command regarding the reserved recording on the OOO(broadcast program title) and the response message "recording of OOO(broadcast program title) has been reserved" to the display apparatus 100.

Therefore, the controller 140 determines the reserved recording regarding OOO (broadcast program title) according to the control command included in the received response information. In addition, the controller 140 controls the outputter 160 to output the response message "recording of OOO (broadcast program title) has been reserved" through at least one of an image and a voice based on the response message included in the received response information. Therefore, the outputter 160 may output the response message "recording of OOO (broadcast program title) has been reserved" in a voice or a text format image.

Detailed operations of generating response information corresponding to the user's utterance received from the display apparatus 100 and transmitting the response information to the display apparatus 100 from the dialogue type server 200 will now be described.

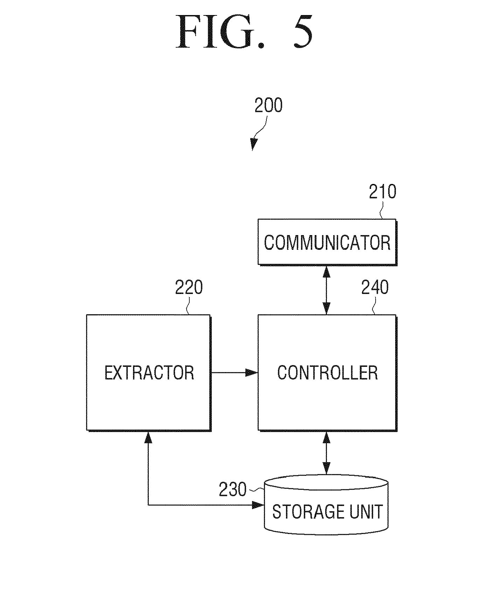

FIG. 5 is a block diagram of a dialogue type server according to an exemplary embodiment.

Referring to FIG. 5, the dialogue type server 200 includes a communicator 210, an extractor 220, a storage unit 230, and a controller 240.

The communicator 210 performs communication with the display apparatus 100, and the extractor 220 extracts the utterance element from the user's utterance received from the user display apparatus 100 through the communicator 210. The storage unit 230 stores dialogue history information for each user and EPG information. The controller 240 generates response information corresponding to the user's utterance in a different format based on the function classified according to the utterance element regarding the user's utterance extracted through the extractor 220. For example, the functions classified as the utterance element may include at least one of the operation control functions of the display apparatus 100 and EPG related function. Therefore, the controller 240 may determine whether the user's utterance is related to EPG or is for controlling operations of the display apparatus 100 according to the extracted utterance element, and generate response information corresponding to the user's utterance according to a result of the determination.

In a case where the extracted utterance element is the EPG related utterance element, the controller 240 determines whether it is possible to provide EPG information corresponding to the user's utterance based on the EPG information pre-stored in the storage unit 230. As a result of the determination, if providing EPG information is possible, the controller 240 generates the response information corresponding to the user's utterance based on the EPG information, and if providing EPG information is not possible, the controller 240 generates the response information related to the user's utterance based on at least one of the EPG information and web search pre-stored in the storage unit 230.

More specifically, when text information on the user's utterance is received, the extractor 220 may extract the utterance element which includes a dialog act, a main goal, and a core element from the received text information. The dialog act may be a label indicating the Illocutionary force of the user's utterance, for example a statement, a request, a question, etc. The main goal may be a label indicating the actual user's intentions from the user's utterance, for example, TV on/off, a program search, a program time search, and a program reservation, etc. In addition, the main goal may be a genre, a program title, a time, a channel name, and an actor/actress name.

For example, in the case of the user's utterance of "what time does OOO (broadcast program title) start?", the dialog act may be "?", and the main goal may be program time search of "start". In addition, the core element may be the program title of "OOO (broadcast program title) program name". Therefore, when text information on the user's utterance of "what time does OOO (broadcast program name) start?" is received, the utterance element including the dialog goal, the main goal and the core element may be extracted from the received text information. When the utterance element is extracted, the controller 240 may determine whether the extracted utterance element is an element related to EPG information with reference to the EPG information stored in the storage unit 230. When the controller 240 determines that the utterance element extracted from the user's utterance is an element related to the EPG information, the controller 240 determines whether the extracted utterance element satisfies the response information corresponding to the user's utterance.

When the extracted utterance element includes the dialog goal, the main goal and the core element, the controller 240 may determine whether the extracted utterance element satisfies the conditions for generating the response information corresponding to the user's utterance. However, when the user's utterance of "what time does it start?" includes only the utterance element regarding the dialog goal "?" and the main goal "start", the controller 240 determines that the extracted utterance element fails to satisfy all conditions for generating the response information corresponding to the user's utterance, and generates alternative response information of inquiring the utterance element regarding the core element based on the dialog history information pre-stored in the storage unit 230. For example, the controller 240 may generate the response information related to a question "which broadcast program?"

When conditions for generating response information corresponding to the user's utterance are satisfied through such operations, the controller 240 may determine whether providing EPG information is possible according to the extracted utterance element based on the EPG information stored in the storage unit 230. As a result of determination, when it is possible to provide the EPG information according to the utterance element, the controller 240 generates response information corresponding to the user' utterance based on the EPG information, and when providing the EPG information is impossible, the controller 240 may generate alternative response information related to the user's utterance.

For example, in the case of the user's utterance of "please reserve OOO (broadcast program title) which airs this week!", the utterance element may be "this week", "OOO(broadcast program title)", "record", "please". When these utterance elements are extracted, the controller 240 may obtain program information and program starting time information regarding the OOO(broadcast program title) from the EPG information stored in the storage unit 230. Therefore, the controller 240 may generate response information which includes the response message generated based on the dialogue history information pre-stored in the storage unit 230 and the control command related to reserved recording regarding the OOO(broadcast program title) based on the obtained program information and starting time information.

In a case of the user's utterance of "who is the main character starring in OOO (broadcast program title)?", the utterance element may be "OOO (broadcast program title)", "main character", "who". When the utterance elements are extracted, the controller 240 checks whether there is main character information on the OOO (broadcast program title) among the EPG information stored in the storage unit 230. As a result of the checking, when it is impossible to obtain information on the main character of the OOO (broadcast program title) from the pre-stored EPG information, the controller 240 generates an alternative response information which inquires whether to receive alternative information related to the user's utterance through the EPG information or the web search. For example, when the user's utterance of receiving alternative information is input from the EPG information, the controller 240 obtains cast information of the OOO (broadcast program title) from the pre-stored EPG information. That is, when the alternative information related to the user's utterance is obtained through the EPG information, the controller 240 may generate the alternative response information including the obtained alternative information based on the dialog history information pre-sorted in the storage unit 230.

When the extracted utterance element is an element related to the EPG information, the controller 240 determines whether the extracted utterance element is an utterance element related to EPG regarding a plurality of requests. If the utterance element is the utterance element related to EPG regarding the plurality of requests, the controller 240 may generate an utterance re-request message for re-requesting the user's utterance in the display apparatus 100.

For example, in the case of the user's utterance of "please record OOO(broadcast program title) which is aired this week, and reserve viewing of ((broadcast program title)!", the utterance elements may be "this week", "OOO(broadcast program title)", " (broadcast program)", "record", "viewing", and "please". When these utterance elements are extracted, the controller 240 determines that there utterance elements("OOO(broadcast program title)", " (broadcast program)", "record" and "viewing" regarding the plurality of requests are in the extracted utterance element. Therefore, the controller 240 may generate a utterance voice re-request message of "request only one" based on the dialogue history information prestored in the storage unit 230.

In a case where the extracted utterance element is utterance element related to the operation control of the display apparatus 100, the controller 240 determines whether the controlling of the operations of the display apparatus 100 corresponding to the user's utterance is possible. As a result of the determination, if controlling of the operation of the display apparatus 100 is possible, the controller 240 may generate response information for controlling operations of the display apparatus 100.

The storage unit 230 may store manual information which may control operations of the display apparatus 100. The manual information includes information which may control operations of the display apparatus 100 according to the user's utterance and information which may control the operations of the display apparatus 100 according to control command except for the user's utterance. Therefore, when the utterance element related to the control of the display apparatus 100 is extracted, the controller 240 determines whether to control operations of the display apparatus 100 according to the user's utterance based on the manual information pre-stored in the storage unit 230. As a result of the determination, if it is possible to control the operations of the display apparatus 100 according to the user's utterance, the controller 240 may generate response information including a control command for performing operations corresponding to the user's utterance.

For example, in the user's utterance of "please change channel to MBC!", the utterance element may be "MBC", "channel" and "change". When the utterance element is extracted, the controller 240 determines that the extracted utterance element is related to function controlling of the display apparatus 100. Next, the controller 240 determines whether changing channel of the display apparatus 100 is possible according to the extracted utterance element with reference to the manual information pre-sorted into the storage unit 230. When the change channel of the display apparatus 100 is possible, the controller 240 may generate response information including a control command for changing the current channel to MBC.

When it is impossible to control operations of the display apparatus 100 according to the user's utterance, the controller 250 may generate response information related to at least one of the operation control method and current state notice of the display apparatus 100.

For example, in the user's utterance of "please make the screen brighter!", the utterance element may be "screen", "brighter", and "please". When the utterance element is extracted, the controller 240 determines that the utterance element is related to function controlling of the display apparatus 100. Next, the controller 240 determines whether screen adjusting of the display apparatus 100 is possible according to the extracted utterance element with reference to the pre-stored manual information. If the screen adjusting of the display apparatus 100 is impossible, the controller 240 may generate response information on screen adjusting of the display apparatus 100 with reference to the manual information stored in the storage unit 230.

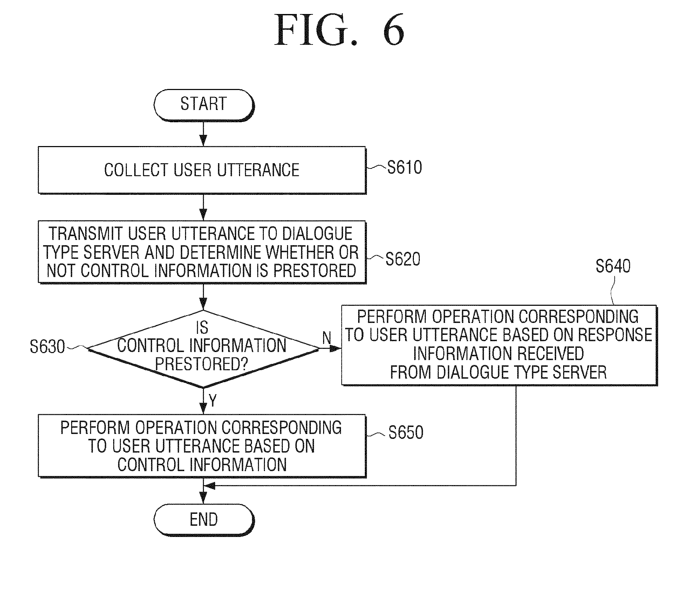

FIG. 6 is a flowchart of a control method for performing operations based on the user's utterance in a display apparatus according to an exemplary embodiment.

Referring to FIG. 6, the display apparatus collects user's utterance from the user (operation S610). When the user's utterance is collected, the display apparatus transmits the collected user utterance to a dialogue type server, and determines whether the control information corresponding to the collected user's utterance is pre-stored (operation S620, S630). As a result of the determination, when the control information corresponding to the collected user's utterance is not pre-stored, the display apparatus performs operations corresponding to the user's utterance based on the received response information from the dialogue type server (operation S640). When the control information corresponding to the collected user utterance is pre-stored, the display apparatus performs operations corresponding to the user's utterance based on the presorted control information (operation S650). In performing operations corresponding to the user's utterance based on the pre-stored control information, when response information is received from the dialogue type server, it is desirable not to perform additional operations based on the received response information.

When the operations corresponding to the user's utterance based on the obtained control information is not performed within a predetermined time, the display apparatus may perform operations corresponding to the user's utterance based on the response information received form the dialogue type server.

For example, when the user's utterance for volume manipulation is collected, the display apparatus transmits the collected user's utterance to the dialogue type server and determines whether the control information corresponding to the user's utterance is pre-stored. As a result of the determination, when the control information corresponding to the user's utterance is pre-stored, the display apparatus may adjust the volume based on the pre-stored control information. That is, when the control information corresponding to the user's utterance is pre-stored, the display apparatus may adjust the volume based on the pre-stored control information before receiving response information from the dialogue type server.

When t the user's utterance for providing contents information is collected, the display apparatus determines whether the control information corresponding to the collected user's utterance is pre-stored. When it is determined that the control information corresponding to the user's utterance is not pre-stored, the display apparatus may perform operations corresponding to the user's utterance based on the response information received from the dialogue type server. That is, the display apparatus may output the response message corresponding to the user's utterance as at least one of an image and a voice or control functions of the display apparatus based on the response information received from the dialogue type server.

The display apparatus may perform the function that the user intended based on the response information received from the dialogue type server and may perform the function based on the control information corresponding to the user's utterance. Therefore, the display apparatus may not only minimize the error in performing the function corresponding to the user's utterance but also perform the function corresponding to the user's utterance at a faster processing speed.

A method of performing operations corresponding to the user's utterance in the display apparatus will now be described.

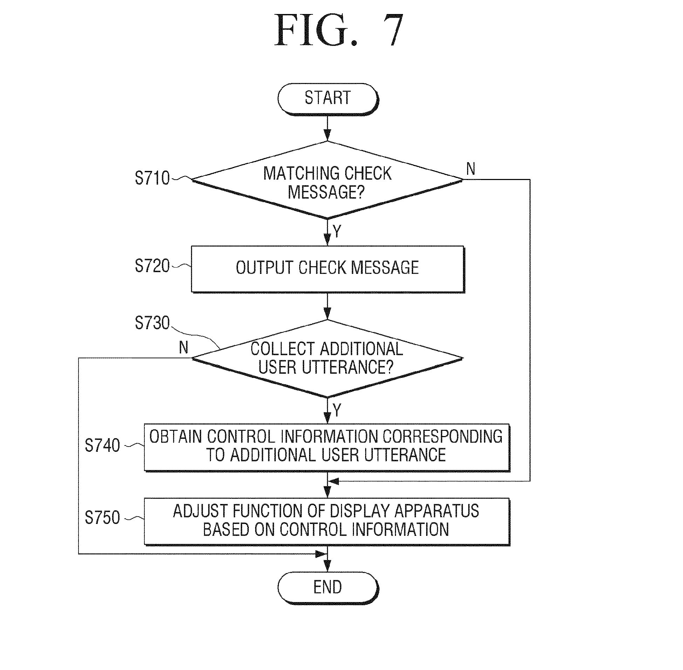

FIG. 7 is a flowchart of a method for performing operations corresponding to the user's utterance in the display apparatus according to an exemplary embodiment.

Referring to FIG. 7, when the user's utterance is collected, the display apparatus determines whether control information corresponding to the collected user's utterance is pre-sorted. As a result of the determination, when the control information corresponding to the user's utterance is pre-stored, the display apparatus obtains the corresponding control information and determines whether the confirmation message is matched to the obtained control information (operation S710). Here, the control information is information for adjusting the functions of the display apparatus regarding each user's utterance to the predetermined target value. Therefore, the display apparatus determines whether the corresponding target information is pre-stored, and determines whether the confirmation message is matched to the target information.

As a result of the determination, if it is determined that the confirmation message is matched to the control information corresponding to the user's utterance, the display apparatus outputs the corresponding confirmation message to as a voice or an image (operation S720).

Next, the display apparatus determines whether an additional user's utterance is collected (operation S730), and when the additional user's utterance is collected, obtains control information corresponding to the additional user's utterance (operation S740). Next, the display apparatus adjusts functions of the display apparatus based on the obtained control information (operation S750). However, when the confirmation message is not matched to the obtained control information at the stage S710, the display apparatus may adjust the functions of the display apparatus based on the control information (operation S750).

More specifically, as illustrated in table 1, the display apparatus may store the table quantifying function adjusting units regarding each user's utterance regarding volume adjustment. When the user's utterance of "turn the volume very loud" is collected, the display apparatus may understand the user's intentions to adjust the volume very loud from the collected user's utterance. Therefore, the display apparatus obtains the target value "current value +10" from the table 1 related to volume adjustment based on the user's intentions. Next, the display apparatus confirms whether a confirmation message regarding the target value "current value +10" is matched, and if it is determined that the confirmation message is matched, it is possible to adjust the current volume based on the target value "current value +10".

As explained in table 2, when the user's utterance of "too loud" is collected from the user, the display apparatus may understand the user's intentions to adjust the volume to be small from the collected user's utterance. Therefore, the display apparatus may obtain the target value "current value -5" from the table 2 related to the volume adjustment based on the user's intentions. When a confirmation message regarding the obtained target value "current value -5" is matched, the display apparatus outputs the confirmation message "turn down the volume?" as at least one of a voice or an image. Next, when an additional user's utterance is collected within the predetermined time, the collected additional user utterance is analyzed to understand the user intentions.

When the collected additional user's utterance is an utterance regarding a response, the display apparatus may adjust the current volume based on the target value obtained from the additional user's utterance.

When the additional user's utterance is collected after the functions of the display apparatus are adjusted based on the target value corresponding to the user's utterance, the display apparatus may re-adjust the adjusted functions based on the collected additional user utterance.

As explained in table 3, the display apparatus may adjust the volume based on the target value corresponding to the previous user's utterance, and collect an additional user's utterance of "sound is too loud" from the user within a predetermined time. In this case, the display apparatus may analyze the collected additional user's utterance to understand the user intentions to readjust the adjusted volume. The display apparatus may obtain the target value of "current value -3" from the table 3 related to volume readjustment. When the target value is obtained, the display apparatus may readjust the volume value which has been adjusted based on the target value corresponding to the previous user's utterance based on the target value corresponding to the additional user's utterance.

As described above, when the user's utterance is collected, the display apparatus transmits the user's utterance to the dialogue type server and determines whether control information corresponding to the collected user utterance is pre-stored. Therefore, the dialogue type server generates response information based on the user's utterance received from the display apparatus, and transmits the generated response information to the display apparatus. The dialogue type server may include a first server which converts the received user's utterance into text information and a second server which generates response information corresponding to the user's utterance converted into text information. More specifically, when the user's utterance is collected, the first server converts the collected user's utterance into text information and transmits the text information to the display apparatus. Next, when the text information on the user's utterance is received from the first server, the display apparatus transmits the received text information to the second server. However, the exemplary embodiment is not limited thereto, and the first server may generate text information on the user's utterance and transmit the text information to the second server. Therefore, the second server generates response information based on the text information received from the first server or the display apparatus, and transmits the generated response information to the display apparatus.

Therefore, when the control information corresponding to the collected user's utterance is not pre-stored, the display apparatus may output the response message or control the functions corresponding to the user's utterance based on the response information received from the second server of the dialogue type server.

While not restricted thereto, the exemplary embodiments can be written as computer programs and can be implemented in general-use digital computers that execute the programs using a computer readable recording medium. Examples of the computer readable recording medium include magnetic storage media (e.g., ROM, floppy disks, hard disks, etc.) and optical recording media (e.g., CD-ROMs, or DVDs). Also, the exemplary embodiments may be written as computer programs transmitted over a computer-readable transmission medium, such as a carrier wave, and received and implemented in general-use digital computers that execute the programs. Moreover, while not required in all aspects, one or more units or elements of the above-described apparatuses may include a processor or microprocessor executing a computer program stored in a computer-readable medium.

Although a few embodiments of the present invention have been shown and described, it would be appreciated by those skilled in the art that changes may be made in these exemplary embodiments without departing from the principles of the inventive concept, the scope of which is defined in the claims.

## Claims

1. A display apparatus comprising:
a voice collector which collects a user's utterance;
a communicator which transmits the user's utterance to a dialogue type server, and receives response information generated based on the user's utterance;
a storage unit which stores control information corresponding to each user's utterance; and
a controller which determines whether the control information corresponding to the collected user's utterance is stored in the storage unit while transmitting the collected user's utterance to the dialogue type server;
wherein the controller performs operations corresponding to the user's utterance based on the stored control information when the control information corresponding to the collected user's utterance is stored in the storage unit, and performs operations corresponding to the user's utterance based on the response information received from the dialogue type server when the control information corresponding to the collected user's utterance is not stored in the storage unit.

2. The display apparatus according to claim 1,
wherein the controller performs operations corresponding to the user's utterance based on the response information received from the dialogue type server when the operations corresponding to the user's utterance are not performed based on the control information stored in the storage unit within a predetermined time.

3. The display apparatus according to claim 1 or claim 2,
further comprising an outputter which outputs an image and a voice,
wherein the storage unit matches and stores a confirmation message to at least one of control information among control information of each user's utterance, and
the controller outputs the confirmation message through the outputter when the confirmation message is matched to the control information corresponding to the collected user's utterance, and controls a function of the display apparatus based on the control information when additional user's utterance is collected.

4. The display apparatus according to claim 3,
wherein the control information is information for adjusting the function of the display apparatus to a predetermined target value corresponding to each user's utterance.

5. The display apparatus according to claim 4,
wherein the controller readjusts the function of the display apparatus when the additional user's utterance is collected after the function of the display apparatus is adjusted to the predetermined target value.

6. The display apparatus according to any one of claims 3 to 5,
wherein the response information is one of a response message corresponding to the user's utterance or a control command for controlling the function of the display apparatus.

7. The display apparatus according to any one of claims 1 to 6,
wherein the dialogue type server includes a first server which converts the collected user's utterance into text information and a second server which generates response information corresponding to the user's utterance converted into the text information, and
the controller converts the collected user's utterance into a digital signal and transmits the digital signal to the first server, and when the text information on the user's utterance is received from the first server, transmits the text information to the second server to receive the response information corresponding to the user's utterance.

8. A method of controlling a display apparatus, the method comprising:
collecting a user's utterance;
determining whether control information corresponding to the collected user's utterance is prestored while transmitting the collected user's utterance to a dialogue type server; and
performing operations corresponding to the user's utterance based on the prestored control information when the control information corresponding to the collected user's utterance is prestored, and if not, performing operations corresponding to the user's utterance based on response information received from the dialogue-type server, as a result of determination.

9. The method of controlling a display apparatus according to claim 8,
further comprising receiving the response information corresponding to the collected user's utterance from the dialogue-type server after the determining;
wherein the performing the operations performs operations corresponding to the user's utterance based on the response information when the operations corresponding to the user's utterance are not performed based on the control information prestored within a predetermined time.

10. The method of controlling a display apparatus according to claim 8 or claim 9,
wherein the performing the operations outputs a confirmation message when the confirmation message is matched to the control information corresponding to the collected user's utterance, and controls the function of the display apparatus based on the control information.

11. The method of controlling a display apparatus according to claim 10,
wherein the control information is information for adjusting the function of the display apparatus to a predetermined target value corresponding to each user's utterance.

12. The method of controlling a display apparatus according to any one of claims 9 to 11,
wherein the performing the operations readjusts the function of the display apparatus based on the control information corresponding to an additional user's utterance when the additional user utterance is collected after the function of the display apparatus is adjusted to the predetermined target value.

13. The method of controlling a display apparatus according to any one of claims 10 to 12,
wherein the response information is one of a response message corresponding to the user's utterance or a control command for controlling the function of the display apparatus.

14. The method of controlling a display apparatus according to any one of claims 8 to 13,
wherein the dialogue-type server includes a first server which converts the collected user's utterance into text information and a second server which generates response information corresponding to the user's utterance converted into the text information, and
the performing the operations converts the collected user's utterance into a digital signal and transmits the digital signal to the first server, and when the text information on the user's utterance is received from the first server, transmits the text information to the second server to receive the response information corresponding to the user's utterance.
